(19) Europäisches Patentamt / European Patent Office / Office européen des brevets

(11) **EP 4 610 087 A1**

(12) **EUROPEAN PATENT APPLICATION**

(43) Date of publication:
03.09.2025 Bulletin 2025/36

(21) Application number: 25155972.0

(22) Date of filing: 05.02.2025

(51) International Patent Classification (IPC):
**B60L 3/00** (2019.01) **B60L 3/12** (2006.01)
**B60L 15/20** (2006.01) **B60Q 5/00** (2006.01)
**G10K 15/04** (2006.01) **B60W 30/18** (2012.01)
**B60W 30/188** (2012.01) **G10K 15/02** (2006.01)

(52) Cooperative Patent Classification (CPC):
**B60L 15/2054; B60L 3/00; B60L 3/12; B60L 15/20;**
**B60Q 5/00; B60Q 5/005; B60Q 5/008;**
**B60W 30/18009; B60W 30/188; G10K 15/02;**
B60L 2240/00; B60L 2240/14; B60L 2240/16;
B60L 2240/22; B60L 2240/24; (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.02.2024 JP 2024029132

(71) Applicant: **TOYOTA JIDOSHA KABUSHIKI
KAISHA**
**Aichi-Ken 471-8571 (JP)**

(72) Inventor: **SHIRATORI, Shinya**
**TOYOTA-SHI, AICHI-KEN, 471-8571 (JP)**

(74) Representative: **Cabinet Beau de Loménie
103, rue de Grenelle
75340 Paris Cedex 07 (FR)**

(54) **BATTERY ELECTRIC VEHICLE WITH SELECTABLE ENGINE SOUND SIMULATION**

(57) A battery electric vehicle (100) having an electric motor (2) as a drive source, the battery electric vehicle (100) includes a processor configured to reproduce characteristics of a plurality of kinds of virtual mobilities different from the battery electric vehicle (100), wherein the processor is configured to execute reading information on designating at least one of the virtual mobilities from a medium different from the battery electric vehicle (100), and reproducing a characteristic of one virtual mobility designated by the information acquired from the medium without requesting a user of the battery electric vehicle (100) to select one of the virtual mobilities.

FIG. 3

```
                    START
                      |
         S101 ──< REGISTRATION
   No         MEDIUM IS INSTALLED? >
    |              |
    |             YES
    |              |
    |   S102 ─ READ INFORMATION IN REGISTRATION
    |              MEDIUM
    |              |
    |   S103 ─ READ VIRTUAL VEHICLE MODEL DATA
    |          CORRESPONDING TO TARGET VIRTUAL
    |          VEHICLE FROM STORAGE DEVICE
    |              |
    |   S104 ─ SIMULATE TARGET VIRTUAL VEHICLE
    |              |
    └──────────────┤
                   |
                  END
```

(Cont. next page)

(52) Cooperative Patent Classification (CPC): (Cont.)
B60L 2240/421; B60L 2240/423; B60L 2240/461;
B60L 2240/463; B60L 2240/50; B60L 2240/507;
B60L 2240/62; B60L 2250/00; B60L 2250/16;
B60L 2250/24; B60L 2250/26; B60L 2260/20;
B60L 2260/26; B60L 2260/44; B60L 2270/42

**Description**

BACKGROUND OF THE INVENTION

1. Field of the Invention

The present disclosure relates to a battery electric vehicle.

2. Description of Related Art

Japanese Patent No. 6787507 (JP 6787507 B) discloses a battery electric vehicle that can pseudo-reproduce a manual gear shift operation of a manual transmission vehicle. The battery electric vehicle is configured to switch between an MT traveling mode in which traveling accompanied by the pseudo manual gear shift operation is performed and an EV traveling mode in which general EV traveling is performed by using a switch or the like. In the MT traveling mode, an engine sound and acceleration characteristics of the manual transmission vehicle are reproduced.

SUMMARY OF THE INVENTION

As one of elements that characterize driving sensation of each vehicle, there is a sound, such as an engine sound or a traveling sound, or an acceleration feeling of the vehicle in response to a driving operation. These elements are significant points when a user of the battery electric vehicle feels fun in driving the vehicle. Preferences for these elements vary from user to user. In addition, the user may wish to enjoy various sounds of the vehicle or the acceleration feeling depending on a user's mood.

Therefore, in the battery electric vehicle, different vehicles are simulated by reproducing the sound or the acceleration feeling. By enabling the user to select a vehicle to be simulated from among a plurality of vehicles, the user can enjoy driving. Note that the user may feel bothered by the operation for selection at the same time.

The present disclosure provides a battery electric vehicle capable of simulating a plurality of vehicles, in which a user can select a vehicle to be simulated and at the same time can reduce an effort needed for the selection.

According to a first aspect of the present disclosure, there is provided a battery electric vehicle having an electric motor as a drive source. The battery electric vehicle includes a processor configured to reproduce characteristics of a plurality of kinds of virtual mobilities different from the battery electric vehicle. The processor is configured to execute reading information for designating at least one of the virtual mobilities from a medium different from the battery electric vehicle, and reproducing a characteristic of one virtual mobility designated by the information acquired from the medium without requesting a user of the battery electric vehicle to select one of the virtual mobilities.

According to the present disclosure, the virtual mobility of which the characteristic is reproduced is decided by information acquired from a registration medium. Since the virtual mobility is decided without requesting the user of the battery electric vehicle to select the virtual mobility, the user does not have to make the effort of making a selection, which is convenient. In this way, usability can be improved.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing a configuration of a battery electric vehicle according to an embodiment;
FIG. 2 is a block diagram showing an example of a functional configuration related to reproduction of a sound of a virtual mobility;
FIG. 3 is a flowchart showing an example of processing related to simulation of the virtual mobility;
FIG. 4 is a diagram showing an example of a registration medium;
FIG. 5 is a flowchart showing another example of processing related to simulation of the virtual mobility;
FIG. 6 is a graph for describing an MT vehicle model; and
FIG. 7 is a graph for describing a drive wheel torque calculated by the MT vehicle model.

DETAILED DESCRIPTION OF EMBODIMENTS

Hereinafter, an embodiment of the present disclosure will be described with reference to the drawings. In the drawings, the same or corresponding portions are denoted by the same reference numerals and description thereof will be simplified or will not be repeated.

1. Configuration of Power System of Battery Electric Vehicle

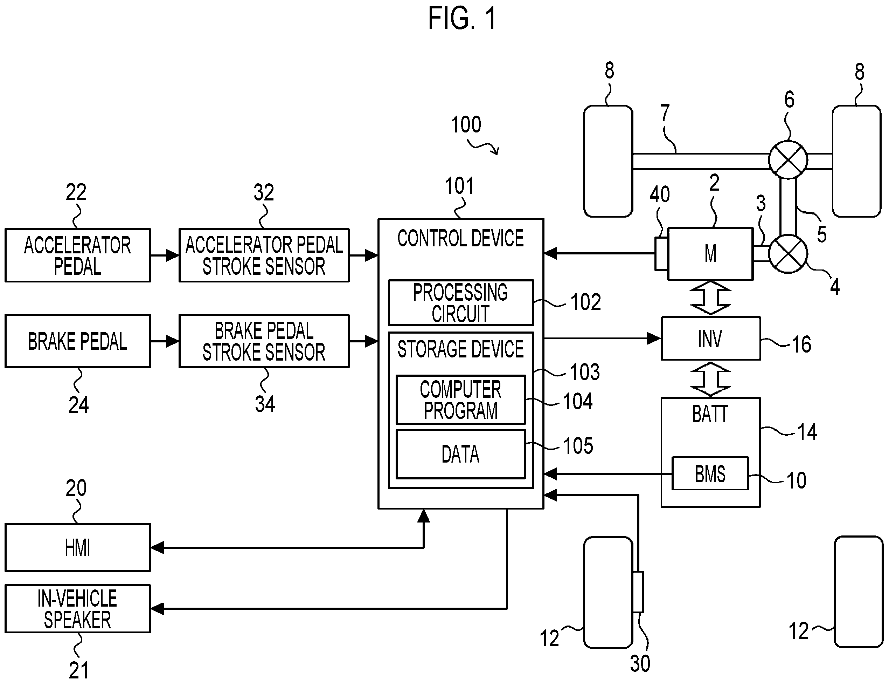

FIG. 1 is a diagram schematically showing a configuration of a battery electric vehicle 100 according to the embodiment of the present disclosure. First, a configuration of a power system of the battery electric vehicle 100 will be described with reference to FIG. 1.

The battery electric vehicle 100 includes an electric motor (M) 2 as a drive source for traveling. The electric motor 2 is, for example, a three-phase alternating current motor. An output shaft 3 of the electric motor 2 is connected to a first end of a propeller shaft 5 via a gear mechanism 4. A second end of the propeller shaft 5 is connected to a drive shaft 7 in front of a vehicle via a differential gear 6.

The battery electric vehicle 100 includes drive wheels 8 as front wheels and driven wheels 12 as rear wheels. The drive wheels 8 are provided at both ends of the drive shaft 7, respectively.

The battery electric vehicle 100 includes a battery (BATT) 14 and an inverter (INV) 16. The battery 14 stores electric energy for driving the electric motor 2. That is, the battery electric vehicle 100 is a battery electric vehicle (BEV) that travels with electric energy stored in the battery 14. The inverter 16 is, for example, a voltage type inverter. The inverter 16 controls a motor torque output by the electric motor 2 through PWM control.

2. Configuration of Control System of Battery Electric Vehicle

Subsequently, a configuration of a control system of the battery electric vehicle 100 will be described with reference to FIG. 1.

The battery electric vehicle 100 includes a vehicle speed sensor 30 for detecting a vehicle speed. At least one of wheel speed sensors (not shown) respectively provided in the right and left drive wheels 8 and the right and left driven wheels 12 is used as the vehicle speed sensor 30.

The battery electric vehicle 100 includes an accelerator pedal stroke sensor 32. The accelerator pedal stroke sensor 32 is provided in an accelerator pedal 22 and outputs a signal indicating an operation state of the accelerator pedal 22. The operation state of the accelerator pedal 22 typically includes an accelerator operation amount and an accelerator operation speed. In addition, the battery electric vehicle 100 includes a brake pedal stroke sensor 34. The brake pedal stroke sensor 34 is provided in a brake pedal 24 and outputs a signal indicating an operation state of the brake pedal 24. The operation state of the brake pedal 24 typically includes a brake operation amount or a brake operation speed.

The accelerator pedal 22 and the brake pedal 24 are each one of driving operation members used when driving the battery electric vehicle 100. In addition, the battery electric vehicle 100 may include various driving operation members, such as a steering wheel for driving related to steering.

The battery electric vehicle 100 includes a rotation speed sensor 40. The rotation speed sensor 40 is provided in the electric motor 2 and outputs a signal indicating a rotation speed of the electric motor 2.

The battery electric vehicle 100 includes a battery management system (BMS) 10. The battery management system 10 is a device that monitors a cell voltage, a current, a temperature, and the like of the battery 14. The battery management system 10 has a function of estimating a state of charge (SOC) of the battery 14.

The battery electric vehicle 100 includes a human machine interface (HMI) 20 as an interface with a driver, and an in-vehicle speaker 21. The HMI 20 presents various kinds of information to the driver through a display or sound, and receives various inputs from the driver. The HMI 20 is configured of a display (for example, a multi-information display or a meter display), a switch, a touch pad, a speaker phone, a touch screen, and the like. For example, the HMI 20 displays various kinds of information on the display and receives an input from the driver regarding a display content by operating a switch. In addition, for example, the HMI 20 displays various kinds of information on a touch screen and receives an input from the driver regarding a display content through a touch operation on the touch screen. The in-vehicle speaker 21 is a sound generator that artificially generates a sound in a vehicle cabin. In particular, the in-vehicle speaker 21 can output a pseudo engine sound to be described below. The in-vehicle speaker 21 may be configured as a part of the HMI 20.

The battery electric vehicle 100 includes a control device 101. Various sensors and devices to be controlled mounted on the battery electric vehicle 100 are connected to the control device 101 by an in-vehicle network, such as a controller area network (CAN). In addition to the vehicle speed sensor 30, the accelerator pedal stroke sensor 32, the brake pedal stroke sensor 34, and the rotation speed sensor 40, various sensors may be mounted on the battery electric vehicle 100 and connected to the control device 101 via the in-vehicle network. For example, the battery electric vehicle 100 may be mounted with a position sensor and a recognition sensor, such as a camera.

The control device 101 generates control signals related to various controls of the battery electric vehicle 100 based on signals acquired from the respective sensors. The control device 101 is typically an electronic control unit (ECU). The control device 101 may be a combination of a plurality of ECUs. The control device 101 includes at least a processing circuit 102 and a storage device 103.

The processing circuit 102 executes various processes. The processing circuit 102 is configured of, for example, a general-purpose processor, a specific application processor, a central processing unit (CPU), a graphics processing unit (GPU), an application specific integrated circuit (ASIC), a field-programmable gate array (FPGA), an integrated circuit, a conventional circuit, and one or a combination of a plurality of these members. A processor including a transistor and other circuits is an example of the processing circuit 102. The processing circuit 102 can also be referred to as a circuitry or a processing circuitry. The circuitry is hardware that is programmed to implement the functions described in the present disclosure, or hardware that executes the functions.

The storage device 103 stores various kinds of information needed for the processing circuit 102 to execute processing. The storage device 103 is configured of, for example, a recording medium, such as a random access memory (RAM), a read only memory (ROM), a solid state drive (SSD), or a hard disk drive (HDD). The storage device 103 stores a computer program 104 that can be executed by the processing circuit 102, and various data 105. The computer program 104 is configured of a plurality of instructions that describes processing to be executed by the processing circuit 102. The computer program 104 may be recorded on a computer-readable recording medium. The functions of the control device 101 are implemented by cooperation between the processing circuit 102 that executes the computer program 104 and the storage device 103.

3. Simulation Mode for Simulating Virtual Vehicle

The battery electric vehicle 100 has a "simulation mode" as a control mode. The simulation mode is a mode in which the battery electric vehicle 100 simulates (reproduces) a characteristic of a virtual vehicle (hereinafter, referred to as a "target virtual vehicle") selected by the driver from among a plurality of virtual vehicles. The virtual vehicle is a vehicle different from the battery electric vehicle 100. The virtual vehicle may be an engine vehicle or may be a battery electric vehicle.

The characteristic to be simulated in the simulation mode includes a sound or a driving characteristic of the virtual vehicle. For example, in the simulation mode, a sound of the target virtual vehicle is reproduced in the battery electric vehicle 100. The control device 101 generates a simulated sound that simulates the sound of the target virtual vehicle, and outputs the simulated sound through the in-vehicle speaker 21 of the battery electric vehicle 100. Typically, the simulated sound is a driving sound or a traveling sound of the target virtual vehicle.

Hereinafter, the generation and output of the simulated sound that simulates the sound of the target virtual vehicle will be described in more detail. In the following description, as an example, a pseudo engine sound that simulates an engine sound of an engine vehicle is considered. Note that the present disclosure is similarly applicable to other sounds. In a case of generalization, the term "pseudo engine sound" in the following description is replaced with "simulated sound".

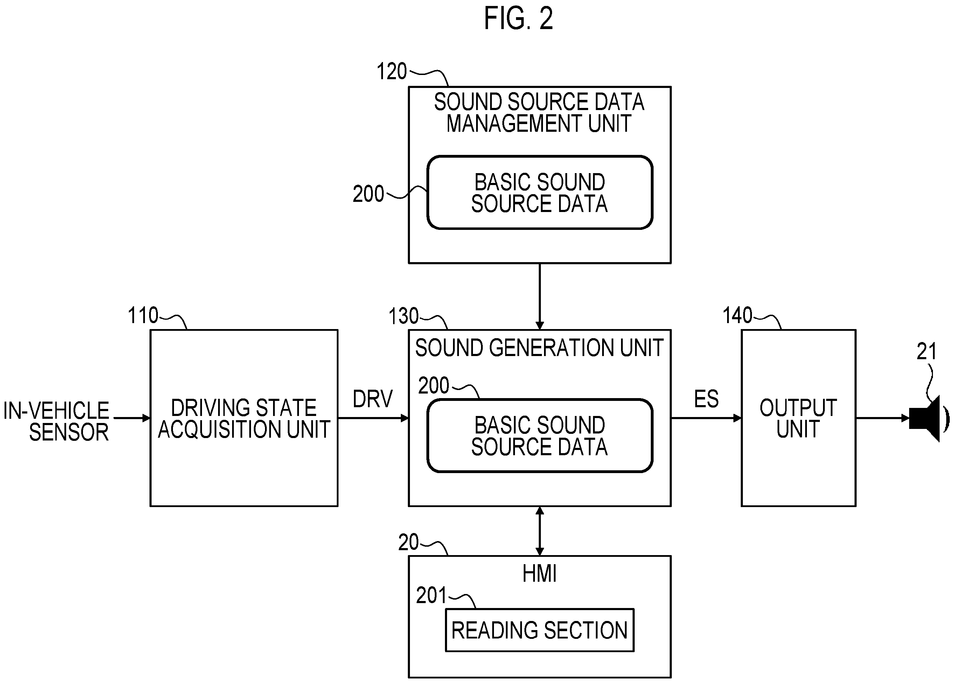

FIG. 2 is a block diagram showing an example of a functional configuration related to the generation and output of the simulated sound of the target virtual vehicle. The control device 101 includes a driving state acquisition unit 110, a sound source data management unit 120, a sound generation unit 130, and an output unit 140 as functional blocks. These functional blocks are implemented by the cooperation between the processing circuit 102 that executes the computer program 104 and the storage device 103.

The driving state acquisition unit 110 acquires driving state information DRV indicating a driving state of the battery electric vehicle 100. The driving state information DRV includes information on a driving operation of the driver, information on a traveling state of the battery electric vehicle 100, information on a situation around the battery electric vehicle 100, and the like. Typically, the driving state information DRV includes information detected by a sensor mounted on the battery electric vehicle 100. For example, the driving state information DRV includes an operation state of the accelerator pedal 22, an operation state of the brake pedal 24, a steering angle, a steering speed, a steering torque, a vehicle speed, a rotation speed of the electric motor 2, and the like. The driving state information DRV may include a position of the battery electric vehicle 100. The driving state information DRV may include a situation around the battery electric vehicle 100 recognized (detected) by a recognition sensor.

In addition, the driving state information DRV includes a virtual engine rotation speed Ne. Here, assumption is made that the target virtual vehicle is an engine vehicle that uses a virtual engine as a power device for traveling. The virtual engine rotation speed Ne is a rotation speed of the virtual engine when assumption is made that the battery electric vehicle 100 is driven by the virtual engine. For example, the driving state acquisition unit 110 may calculate the virtual engine rotation speed Ne to be increased as the vehicle speed is increased. In addition, when the battery electric vehicle 100 has an MT mode (manual mode) described below, the driving state acquisition unit 110 may calculate the virtual engine rotation speed Ne in the MT mode based on a vehicle speed, a total reduction ratio, and a slip ratio of a virtual clutch. Details of the calculation method of the virtual engine rotation speed Ne in the MT mode will be described below.

The sound source data management unit 120 stores and manages basic sound source data 200 used to generate a pseudo engine sound. The sound source data management unit 120 is mainly implemented by one or a plurality of storage devices 103. Typically, the basic sound source data 200 includes a plurality of sound source data. The sound source data includes, for example, sound source data of a sound caused by engine combustion (for low rotation speed, for medium rotation speed, and for high rotation speed), sound source data of a sound caused by a drive system, such as a gear (for low rotation speed, for medium rotation speed, and for high rotation speed), sound source data of a noise sound, and sound source data of an event sound (for example, a rasping sound or a stalling sound). Each sound source data is generated in advance through a simulation based on an engine model and a vehicle model of an engine vehicle. Each sound source data can be flexibly adjusted. That is, at least one of a sound pressure and a frequency of the sound indicated by the sound source data can be flexibly adjusted.

The sound generation unit 130 (sound simulator) is a simulator that generates a pseudo engine sound. The sound generation unit 130 acquires at least a part of the driving state information DRV from the driving state acquisition unit 110. In particular, the sound generation unit 130 acquires information on the virtual engine rotation speed Ne or the vehicle speed from the driving state acquisition unit 110. In addition, the sound generation unit 130 reads the basic sound source data 200 from the sound source data management unit 120. Then, the sound generation unit 130 generates a pseudo engine sound corresponding to the driving state (the virtual engine rotation speed Ne or the vehicle speed) of the battery electric vehicle 100 by combining one or more pieces of sound source data included in the basic sound source data 200. Engine sound data ES is data indicating the generated pseudo engine sound.

The generation of the pseudo engine sound is a well-known technique and is not particularly limited in the present embodiment. For example, the pseudo engine sound may be generated by a well-known engine sound simulator used in a game or the like. A method may be adopted in which a map of the virtual engine rotation speed Ne and a frequency and a map of a virtual engine torque and a sound pressure are prepared, the frequency of the pseudo engine sound is increased or decreased in proportion to the virtual engine rotation speed Ne, and the sound pressure is increased or decreased in proportion to the virtual engine torque.

The output unit 140 receives the engine sound data ES generated by the sound generation unit 130. Then, the output unit 140 outputs the pseudo engine sound through the in-vehicle speaker 21 based on the engine sound data ES. As a result, the driver of the battery electric vehicle 100 can have a feeling as if he or she is driving the target virtual vehicle.

In addition, in the battery electric vehicle 100, the driving characteristic may be reproduced in addition to the sound of the target virtual vehicle or instead of the sound. The control device 101 manages virtual vehicle model data indicating a model of the target virtual vehicle, and reproduces the driving characteristic of the target virtual vehicle based on the virtual vehicle model data. As a result, the driver of the battery electric vehicle 100 can have a feeling as if he or she is driving the target virtual vehicle. In the simulation mode, the control device 101 may simulate a driving characteristic of a transmission vehicle (MT vehicle). Details of the "MT mode (manual mode)" that simulates the driving characteristic of the MT vehicle in the battery electric vehicle will be described below in Section 9. The general data for simulating the characteristic of the virtual vehicle including the basic sound source data 200 may be referred to as virtual vehicle model data.

4. Designation of Target Virtual Vehicle

The target virtual vehicle to be simulated in the simulation mode can be optionally designated by the user of the battery electric vehicle 100 from among a plurality of virtual vehicles. Specifically, a plurality of kinds of virtual vehicle model data for a plurality of kinds of virtual vehicles is prepared. The user designates a preferred virtual vehicle, and the control device 101 reproduces the characteristic of the target virtual vehicle by using virtual vehicle data corresponding to the target virtual vehicle designated by the user. As a result, the user of the battery electric vehicle 100 can have a feeling as if he or she is riding in the virtual vehicle of his or her preference. Hereinafter, a method for the user to designate the target virtual vehicle will be described.

The target virtual vehicle is designated using a medium in which information for designating the target virtual vehicle is registered (hereinafter, referred to as a registration medium). The registration medium is a medium that is external to the battery electric vehicle 100 and that is different from the device, such as the storage device 103 included in the battery electric vehicle 100. Examples of the registration medium include an object with an IC chip built in, an object on which code information, such as a bar code or a QR code (registered trademark), is printed, and a storage medium, such as a flash memory, like an SD card or a USB memory. When the registration medium is a storage medium, the phrase "information for designating the target virtual vehicle is registered" can also be rephrased as "information for designating the target virtual vehicle is stored".

The HMI 20 includes a reading section 201. The reading section 201 can read the information registered in the registration medium. For example, the reading section 201 may include an antenna for reading information from an IC chip, may include a scanner for reading code information, or may include an insertion port of an SD card or a USB memory. When the registration medium is a device capable of performing communication, the reading section 201 may acquire the information by performing communication with the registration medium.

In one registration medium, information for designating one target virtual vehicle is registered in advance. Then, the user sets the registration medium in the reading section 201, thereby designating one target virtual vehicle. The sound generation unit 130 acquires, from the sound source data management unit 120, one sound source data corresponding to the designated target virtual vehicle from among a plurality of kinds of the basic sound source data 200. Then, the sound generation unit 130 generates the pseudo engine sound by using the acquired basic sound source data 200. In addition, the user can change the target virtual vehicle by changing the registration medium installed in the reading section 201. When the designated target virtual vehicle is changed, a pseudo engine sound is also changed to be in accordance with the designated target virtual vehicle.

The same applies to the driving characteristic. The control device 101 reads the virtual vehicle model data corresponding to the designated target virtual vehicle from the storage device 103. Then, the driving characteristic of the target virtual vehicle is reproduced based on the read virtual vehicle model data. When the registration medium installed in the reading section 201 is changed, the virtual vehicle model data to be used is also changed.

The effect of designating the target virtual vehicle using the registration medium will be described. As a comparative example, a method of designating the target virtual vehicle using a display device, such as a touch panel display, is considered. Specifically, a plurality of kinds of target virtual vehicles is presented to the user by being displayed on the touch panel display. The user designates the target virtual vehicle by selecting one of the displayed target virtual vehicles by operating a touch panel.

In this case, the user needs to first operate the touch panel display to call up a screen for selecting the target virtual vehicle. The user may feel that the operation for calling up the selection screen is troublesome. In addition, even after the selection screen is called up, the user has to make the effort of searching for the target virtual vehicle to be designated from among the target virtual vehicles. In particular, when the number of selectable target virtual vehicles is large, the user may feel troublesome to search for the target virtual vehicle to be designated.

With respect to this, in the control device 101 according to the present embodiment, the target virtual vehicle can be selected using the registration medium. Since the designation of the target virtual vehicle is completed solely by installing the registration medium in the reading section 201, the user is not requested to select the target virtual vehicle from the control device 101. The user can designate the target virtual vehicle solely by installing the registration medium without any troublesome operation, such as calling up the selection screen by operating the display or searching for the target virtual vehicle to be designated on the selection screen. This is convenient for the user since the effort needed for the designation is reduced.

In addition, the registration medium may visually represent the designated target virtual vehicle. For example, a card on which a picture or an illustration representing the designated target virtual vehicle is printed together with the code information may be used as the registration medium. The user can intuitively grasp the target virtual vehicle from the picture or the illustration. Alternatively, a shape of the registration medium may represent a shape of the target virtual vehicle. For example, a flash memory having a minicar shape may be used as the registration medium, or an object having a minicar shape with an IC chip built in may be used as the registration medium. In this way, the designated virtual vehicle is represented in a visually easy-to-understand manner, whereby the operation of designating the target virtual vehicle can be performed intuitively.

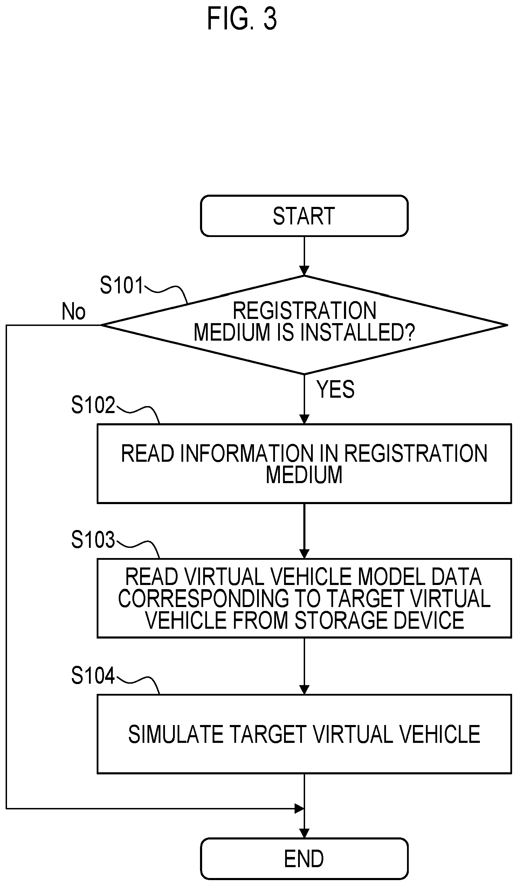

FIG. 3 is a flowchart showing an example of processing related to the designation of the target virtual vehicle. The processing shown in FIG. 3 is implemented by the processing circuit 102 executing the computer program 104. The series of processes is repeatedly executed at a predetermined control cycle, for example, while the battery electric vehicle 100 is traveling.

In step S101, the control device 101 (the processing circuit 102) determines whether or not the registration medium is installed in the reading section 201. When the registration medium is installed (step S101; Yes), the process proceeds to step S102. When the registration medium is not installed (step S101; No), the series of processing is ended.

In step S102, the processing circuit 102 reads information registered in the registration medium. The read information is information for designating the target virtual vehicle. When the information is read, the process proceeds to step S103.

In step S103, the processing circuit 102 reads, from the storage device 103, virtual vehicle model data corresponding to the target virtual vehicle read from the registration medium. When the sound of the target virtual vehicle is reproduced, the basic sound source data 200 corresponding to the target virtual vehicle is read from the sound source data management unit 120. When the virtual vehicle model data is read, the process proceeds to step S104.

In step S104, the processing circuit 102 simulates the target virtual vehicle based on the read virtual vehicle model data. For example, a pseudo engine sound is reproduced such that the frequency changes according to the vehicle speed.

The control device 101 may start the simulation of the target virtual vehicle when the registration medium is installed in the reading section 201, and may end the simulation of the target virtual vehicle when the registration medium is not installed in the reading section 201. That is, the user may set the simulation mode to ON by installing the registration medium in the reading section 201, and may set the simulation mode to OFF by removing the registration medium from the reading section 201.

5. Specific Examples of Registration Medium

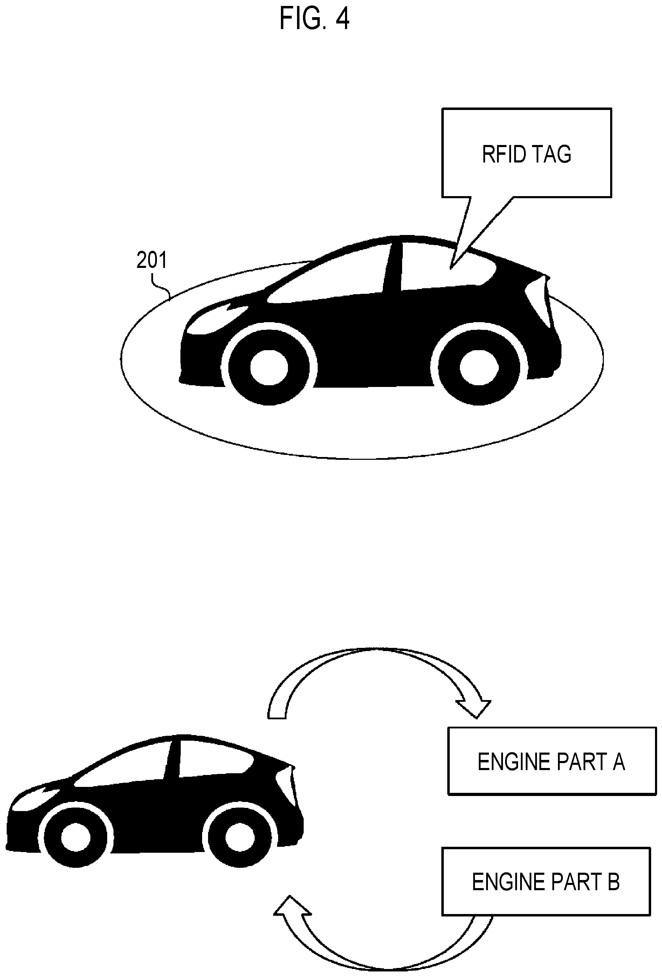

Specific examples of the registration medium are shown in FIG. 4. Here, the registration medium is a minicar with an IC chip built in. In the IC chip built in the minicar, information for designating one virtual vehicle is registered. For example, the minicar may have a built-in RFID tag including an IC chip and an antenna.

In addition, the reading section 201 includes a tray for installing the minicar. The tray is provided at any place in the vehicle cabin of the battery electric vehicle 100. For example, the tray may be provided beside a driver's seat. An antenna for reading information from the IC chip built in the minicar is installed in the tray, and when the minicar is placed on the tray, the information from the IC chip is read out. For example, the information is read out by the antenna of the reading section 201 communicating with the antenna built in the RFID tag of the minicar. In this way, the target virtual vehicle is designated, and the virtual vehicle model data corresponding to the target virtual vehicle is read from the storage device 103. Then, the characteristic of the target virtual vehicle is reproduced based on the read virtual vehicle model data.

The effects of registering the information in the minicar include the following. By using the minicar as the registration medium, the user is more likely to have an affection for the minicar than for an inorganic terminal. Therefore, the operation of designating the target virtual vehicle can be made more enjoyable for the user as well as simply reducing the effort of designating the target virtual vehicle.

In addition, when the tray is provided near the driver's seat, the driver of the battery electric vehicle 100 can drive the battery electric vehicle 100 in a state in which the minicar is in the field of view. As a result, the user can have a feeling as if he or she is driving the selected minicar, and the enjoyment during traveling can be improved in addition to the selection of the target virtual vehicle.

In addition, when the registration medium is in the shape of the minicar, the shape of the minicar may be a vehicle body shape that simulates the shape of the virtual vehicle to be simulated. By simulating the shape of the virtual vehicle that simulates the characteristic, the user can visually recognize which vehicle is simulated. In addition to simulating invisible parts, such as the sound and the driving characteristic, the shape of the vehicle body can be visually grasped, so that the selected virtual vehicle can be felt more familiar, and an affection for the virtual vehicle or the minicar that simulates the virtual vehicle is likely to be increased.

When the registration medium is in the shape of the minicar, the IC chip may be provided in a part inside the minicar. The virtual vehicle designated by one minicar may be changed by replacing the internal part. For example, as shown in FIG. 4, an engine part A with an IC chip built in is removed and an engine part B with a different IC chip built in is mounted in the minicar, whereby it may be possible to change the minicar to a minicar that designates a different virtual vehicle while a vehicle body of the minicar is as it is. In this way, by replacing the part to replace the IC chip, the user can designate various virtual vehicles without changing the vehicle body of the minicar. The user is likely to have an affection for the minicar owned by the user, and the enjoyment of designating the simulation mode using the minicar is improved. In addition, since the part replacement has fun like actually customizing the vehicle, the user is also likely to be attached to the minicar in such a point.

6. Designation Method of Target Virtual Vehicle (Designation by Vehicle Category)

As a modification example of the embodiment, another example of the designation method of the target virtual vehicle will be described. In the registration medium, information for designating a vehicle category may be registered instead of the information for designating one virtual vehicle or in addition to the information for designating one virtual vehicle. The vehicle category represents attributes of the virtual vehicle as a larger category than the kind of the virtual vehicle. The vehicle category may be, for example, a category, such as "engine vehicle" or "battery electric vehicle", or may be a category, such as "compact car", "SUV", or "sports car". In addition, the category may be determined based on an element other than the kind of the vehicle, and for example, the number of engine cylinders, displacement, and the number of gears may be divided into a plurality of categories.

In the present embodiment, the virtual vehicle model data is also stored and managed for each category. In this way, the kinds of the virtual vehicle model data stored in the storage device 103 can be reduced, and data capacity can be saved. In particular, with regard to sound waveform data, it is effective to reduce the kinds of data to be stored. Therefore, the control device 101 may store the virtual vehicle model data for reproducing the driving characteristic for each virtual vehicle, and may store the basic sound source data for each vehicle category.

7. Designation Method of Target Virtual Vehicle

Another example of the designation method of the target virtual vehicle will be described. In the registration medium, information for designating both the kind of the target virtual vehicle and the vehicle category of the target virtual vehicle is registered. In addition, the control device 101 is configured to be communicable with a data center that manages the virtual vehicle model data. When the virtual vehicle model data corresponding to the target virtual vehicle designated by the registration medium is not stored in the storage device 103, the control device 101 first simulates the virtual vehicle based on the virtual vehicle model data corresponding to the designated vehicle category, and downloads the virtual vehicle model data corresponding to the target virtual vehicle from the data center during the simulation.

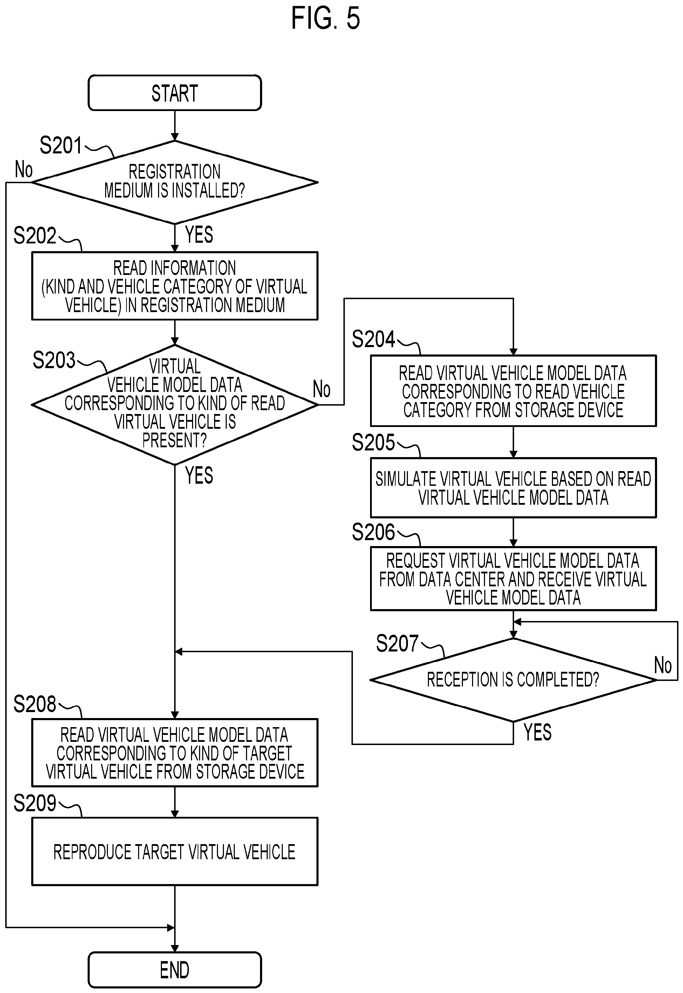

FIG. 5 is a flowchart showing an example of processing in the present embodiment. In step S201, the control device 101 (the processing circuit 102) determines whether or not the registration medium is installed in the reading section 201. When the registration medium is installed (step S201; Yes), the process proceeds to step S202. When the registration medium is not installed (step S201; No), the series of processing is ended.

In step S202, the processing circuit 102 reads information registered in the registration medium. The information to be read is the kind and the vehicle category of the target virtual vehicle designated by the registration medium. When the information is read, the process proceeds to step S203.

In step S203, the processing circuit 102 determines whether or not the virtual vehicle model data corresponding to the read kind of the target virtual vehicle is stored in the storage device 103. When the virtual vehicle model data is stored in the storage device 103 (step S203; Yes), the process proceeds to step S208. When the virtual vehicle model data is not stored in the storage device 103 (step S203; No), the process proceeds to step S204.

In step S204, the processing circuit 102 reads, from the storage device 103, the virtual vehicle model data corresponding to the vehicle category of the target virtual vehicle read from the registration medium. When the virtual vehicle model data corresponding to the vehicle category of the target virtual vehicle is stored in the storage device 103, any of the virtual vehicle model data is read. When the data is read, the process proceeds to step S205.

In step S205, the processing circuit 102 simulates the virtual vehicle based on the read virtual vehicle model data. The virtual vehicle to be simulated here is a virtual vehicle of a different kind from the target virtual vehicle, but of the same vehicle category.

In step S206, the processing circuit 102 requests the data center to transmit the virtual vehicle model data corresponding to the kind of the target virtual vehicle. In addition, reception of the requested data is started. When the reception of the data is started, the process proceeds to step S207.

In step S207, the processing circuit 102 determines whether or not the reception of the virtual vehicle model data corresponding to the kind of the target virtual vehicle from the data center is completed. When the reception of the data is not completed (step S207; No), the process of step S207 is performed again. When the reception of the data is completed (step S207; Yes), the process proceeds to step S208. The received data is stored in the storage device 103. During steps S206 and S207, the simulation of the virtual vehicle continues.

The processes of step S208 and step S209 are the same as the processes of step S103 and step S104 in FIG. 3. The virtual vehicle model data corresponding to the kind of the target virtual vehicle is read from the storage device 103, and the simulation of the target virtual vehicle is performed.

As described above, in the present embodiment, even when the virtual vehicle model data corresponding to the kind of the target virtual vehicle is not stored in the storage device 103, the virtual vehicle of the same vehicle category is simulated, so that it is possible to reproduce a sound or a drive characteristic similar to the sound or the driving characteristic the virtual vehicle designated by the user. Since the sense of incongruity felt by the user is reduced by simulating the virtual vehicle having the similar sound or driving characteristic, the simulation of the virtual vehicle can be started without waiting for the download to be completed. In addition, in the meantime, the virtual vehicle model data corresponding to the kind of the target virtual vehicle is downloaded from the data center, and when the download is completed, the simulation of the target virtual vehicle corresponding to the kind is started. In this way, reproducibility of the target virtual vehicle can be improved, and user satisfaction can be further improved.

8. Information Registered in Registration Medium

The registration medium may be a medium that records information for reproducing the target virtual vehicle, in particular sound waveform information of the simulated sound. The control device 101 reproduces the simulated sound using the sound waveform information stored in the registration medium instead of using the basic sound source data stored in the storage device 103. As a result, the data capacity stored in the storage device 103 can be saved, and a load can be reduced.

9. Application to Battery Electric Vehicle Having MT Mode

The simulation mode may include an MT mode that simulates an MT vehicle. In the MT mode, a torque characteristic specific to the MT vehicle is simulated by controlling a torque of the electric motor 2. In addition, the battery electric vehicle 100 may be provided with a pseudo shifter so that the driver can get driving sensation like the MT vehicle.

That is, the battery electric vehicle 100 controls the output of the electric motor to simulate the driving characteristic (torque characteristics) specific to the MT vehicle. The driver operates the pseudo shifter to perform a pseudo manual gear shift operation. In response to the pseudo manual gear shift operation of the driver, the battery electric vehicle changes the driving characteristic (torque characteristic) by simulating the MT vehicle. As a result, the driver of the battery electric vehicle can have a feeling as if he or she is driving the MT vehicle.

In the MT mode, the battery electric vehicle 100 may generate a pseudo engine sound in response to the driving operation of the driver and output the pseudo engine sound via the in-vehicle speaker 21. Since an engine sound of the MT vehicle is reproduced as well as the driving operation of the MT vehicle, a degree of satisfaction of the driver who seeks realism increases. Hereinafter, a configuration example of a battery electric vehicle 100a having the MT mode will be described. Examples of the MT mode include a "sequential shift mode" and a "three-pedal mode".

When the battery electric vehicle 100a includes a sequential shifter, the sequential shift mode can be selected. The sequential shifter may be a paddle-type shifter or a lever-type pseudo shifter.

The paddle-type shifter is a dummy different from the original paddle-type shifter. The paddle-type shifter has a structure similar to a structure of a paddle-type shifter provided in a clutch pedal-less MT vehicle. The paddle-type shifter is attached to a steering wheel. The paddle-type shifter includes an upshift switch and a downshift switch that decide an operation position. The upshift switch issues an upshift signal when pulled forward, and the downshift switch issues a downshift signal when pulled forward.

On the other hand, the lever-type pseudo shifter is a dummy different from the original shifter, as with the paddle-type shifter. The lever-type pseudo shifter has a structure similar to a structure of a lever-type shifter provided in the clutch pedal-less MT vehicle. The lever-type pseudo shifter is configured to output an upshift signal when a shift lever is tilted forward and to output a downshift signal when the shift lever is tilted backward.

In the MT mode, a drive wheel torque is calculated based on the MT vehicle model. The MT vehicle model is a model for calculating the drive wheel torque to be obtained by operating the accelerator pedal 22 and the sequential shifter when the battery electric vehicle 100a is assumed to be an MT vehicle.

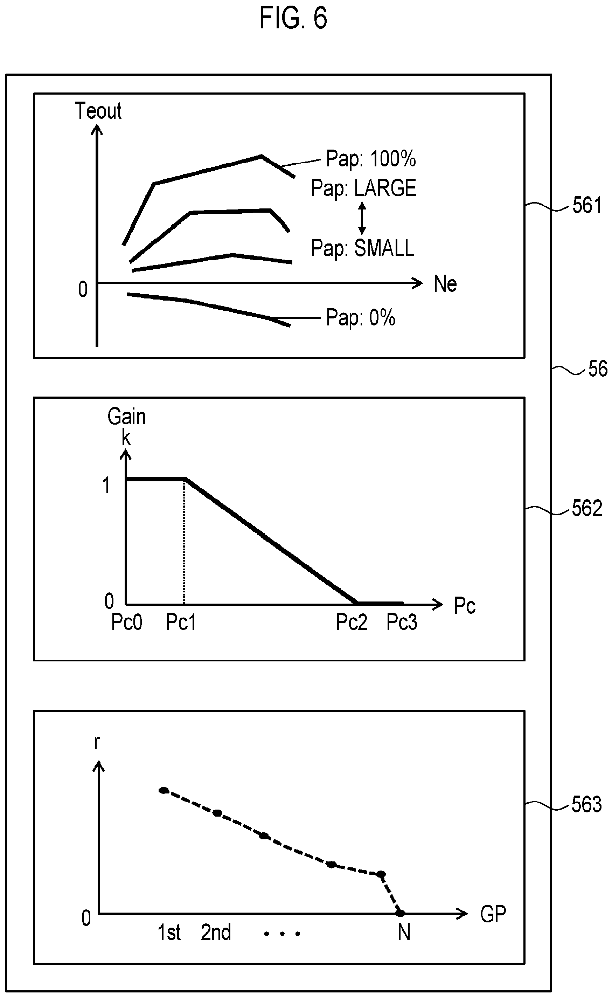

The MT vehicle model will be described with reference to FIG. 6. As shown in FIG. 6, the MT vehicle model includes an engine model 561, a clutch model 562, and a transmission model 563. The engine, the clutch, and the transmission that are virtually implemented by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates a virtual engine rotation speed Ne and a virtual engine output torque Teout. The virtual engine rotation speed Ne is calculated based on a rotation speed Nw of the wheel, a total reduction ratio R, and a slip ratio Rslip of the virtual clutch. For example, the virtual engine rotation speed Ne is represented by Formula (1).

$$\text{Formula (1): } Ne = Nw \times R/(1 - Rslip)$$

The virtual engine output torque Teout is calculated from the virtual engine rotation speed Ne and an accelerator operation amount Pap. As shown in FIG. 6, a map in which a relationship between the accelerator operation amount Pap, the virtual engine rotation speed Ne, and the virtual engine output torque Teout is defined is used for calculating the virtual engine output torque Teout. In this map, the virtual engine output torque Teout with respect to the virtual engine rotation speed Ne is given for each accelerator operation amount Pap. The torque characteristic shown in FIG. 6 can be set to a characteristic assumed for a gasoline engine or can be set to a characteristic assumed for a diesel engine. In addition, the torque characteristic can be set to a characteristic assumed for a naturally aspirated engine or can be set to a characteristic assumed for a supercharge engine.

The clutch model 562 calculates a torque transmission gain k. The torque transmission gain k is a gain for calculating a degree of torque transmission of the virtual clutch corresponding to a virtual clutch operation amount Pc. The virtual clutch operation amount Pc is normally 0%, and is temporarily increased to 100% in conjunction with switching of a virtual gear stage of the virtual transmission. The clutch model 562 has a map as shown in FIG. 6. In the map, the torque transmission gain k is given with respect to the virtual clutch operation amount Pc. In FIG. 6, Pc0 corresponds to a position where the virtual clutch operation amount Pc is 0%, and Pc3 corresponds to a position where the virtual clutch operation amount Pc is 100%. A range from Pc0 to Pc1 and a range from Pc2 to Pc3 are dead zones in which the torque transmission gain k does not change regardless of the virtual clutch operation amount Pc. The clutch model 562 calculates a clutch output torque Tcout using the torque transmission gain k. The clutch output torque Tcout is a torque output from the virtual clutch. For example, the clutch output torque Tcout is given by a product of the virtual engine output torque Teout and the torque transmission gain k (Tcout = Teout × k).

In addition, the clutch model 562 calculates the slip ratio Rslip. The slip ratio Rslip is used to calculate the virtual engine rotation speed Ne in the engine model 561. In the calculation of the slip ratio Rslip, a map in which the slip ratio Rslip is given with respect to the virtual clutch operation amount Pc can be used, as in a case of the torque transmission gain k.

The transmission model 563 calculates a gear ratio r. The gear ratio r is a gear ratio determined by a virtual gear stage GP in the virtual transmission. The virtual gear stage GP is upshifted by one stage in response to the upshift operation of the sequential shifter. On the other hand, the virtual gear stage GP is downshifted by one stage in response to the downshift operation of the sequential shifter. The transmission model 563 has a map as shown in FIG. 6. In the map, the gear ratio r is given to the virtual gear stage GP such that the gear ratio r decreases as the virtual gear stage GP increases. The transmission model 563 calculates a transmission output torque Tgout by using the gear ratio r and the clutch output torque Tcout obtained from the map. For example, the transmission output torque Tgout is given by a product of the clutch output torque Tcout and the gear ratio r (Tgout = Tcout × r). The transmission output torque Tgout discontinuously changes in response to the switching of the gear ratio r. The change in the discontinuous transmission output torque Tgout generates a gear shift shock, and a sense of realism typical of a vehicle including a stepped transmission is created.

The MT vehicle model calculates a drive wheel torque Tw by using a predetermined reduction ratio rr. The reduction ratio rr is a fixed value determined by the mechanical structure from the virtual transmission to the drive wheels. The value obtained by multiplying the gear ratio r by the reduction ratio rr is the total reduction ratio R. The MT vehicle model calculates the drive wheel torque Tw from the transmission output torque Tgout and the reduction ratio rr. For example, the drive wheel torque Tw is given by a product of the transmission output torque Tgout and the reduction ratio rr (Tw = Tgout × rr).

The control device 101 converts the drive wheel torque Tw calculated by the MT vehicle model into a requested motor torque Tm. The requested motor torque Tm is a motor torque needed to implement the drive wheel torque Tw calculated by the MT vehicle model. For the conversion of the drive wheel torque Tw into the requested motor torque Tm, the reduction ratio from an output shaft of the electric motor 2 to the drive wheels is used. Then, the control device 101 controls the inverter 16 in accordance with the requested motor torque Tm to control the electric motor 2.

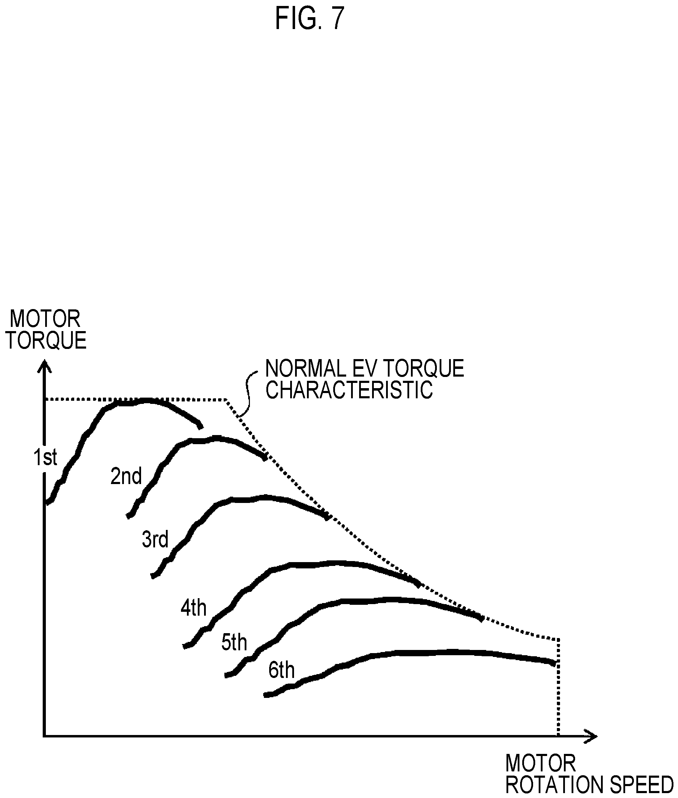

FIG. 7 is a graph showing the torque characteristic of the electric motor 2 implemented by the motor control using the MT vehicle model as compared with the torque characteristic of the electric motor 2 implemented by normal motor control as an electric vehicle (EV). With the motor control using the MT vehicle model, as shown in FIG. 7, the torque characteristic (solid line in FIG. 7) that simulates the torque characteristic of the MT vehicle can be implemented according to the virtual gear stage set by the sequential shifter. In FIG. 7, the number of gear stages is six.

In addition, the battery electric vehicle 100 may include a pseudo shift lever (pseudo shift device) and a pseudo clutch pedal instead of the sequential shifter. In this case, the three-pedal mode can be selected as the MT mode. Note that the pseudo shift lever and the pseudo clutch pedal are merely dummies different from the original shift lever and clutch pedal.

The pseudo shift lever has a structure that simulates a shift lever provided in the MT vehicle. The disposition and the operation feeling of the pseudo shift lever are the same as the disposition and the operation feeling of the actual MT vehicle. The pseudo shift lever is provided with a position corresponding to each gear stage, for example, first gear, second gear, third gear, fourth gear, fifth gear, sixth gear, reverse, and neutral. The pseudo shift lever is provided with a shift position sensor that detects the gear stage by discriminating the position of the pseudo shift lever.

The pseudo clutch pedal has a structure that simulates a clutch pedal provided in the MT vehicle. The disposition and the operation feeling of the pseudo clutch pedal are the same as the disposition and the operation feeling of the actual MT vehicle. The pseudo clutch pedal is operated when the pseudo shift lever is operated. That is, the driver depresses the pseudo clutch pedal when the driver wishes to change the gear stage settings by using the pseudo shift lever, and in a case where the gear stage settings have been changed, the driver releases and returns the pseudo clutch pedal to the original position. The pseudo clutch pedal is provided with a clutch position sensor for detecting a depression amount of the pseudo clutch pedal.

The vehicle model used for calculating the drive wheel torque is the same as the vehicle model shown in FIG. 6. Note that the virtual clutch operation amount Pc is replaced with the depression amount of the pseudo clutch pedal detected by the clutch position sensor. In addition, the virtual gear stage GP is decided by the position of the pseudo shift lever detected by the shift position sensor.

10. Other Embodiments

In the above description, the target virtual vehicle to be simulated in the simulation mode is described as a vehicle other than the battery electric vehicle 100, but the target virtual vehicle to be simulated is not limited to a vehicle. For example, the target virtual vehicle can be expanded to a mobility including a train, an airplane, and the like in addition to the vehicle. In this case, the virtual vehicle may be referred to as a virtual mobility.

**Claims**

1. A battery electric vehicle (100) having an electric motor (2) as a drive source, the battery electric vehicle (100) comprising a processor configured to reproduce characteristics of a plurality of kinds of virtual mobilities different from the battery electric vehicle (100),
   wherein the processor is configured to execute

   reading information on designating at least one of the virtual mobilities from a medium different from the battery electric vehicle (100), and
   reproducing a characteristic of one virtual mobility designated by the information acquired from the medium without requesting a user of the battery electric vehicle (100) to select one of the virtual mobilities.

2. The battery electric vehicle (100) according to claim 1, wherein the reproduction of the characteristic of the one virtual mobility is the reproduction of a pseudo engine sound that simulates an engine sound of the one virtual mobility.

3. The battery electric vehicle (100) according to claim 1, wherein the reproduction of the characteristic of the one virtual mobility is control of the battery electric vehicle (100) such that a driving characteristic of the one virtual mobility is simulated.

4. The battery electric vehicle (100) according to any one of claims 1 to 3, wherein the medium is an object with an IC chip built in, an object on which code information is printed, or a storage medium.

5. The battery electric vehicle (100) according to any one of claims 1 to 3, wherein the medium is an object that visually represents the one virtual mobility designated by the medium.

**6.** The battery electric vehicle (100) according to any one of claims 1 to 3, wherein the medium is an object having a shape of a minicar.

**7.** The battery electric vehicle (100) according to claim 6, wherein the medium is an object having a shape of a minicar that simulates a shape of the one virtual mobility designated by the medium.

**8.** The battery electric vehicle (100) according to any one of claims 1 to 3, further comprising a reading section (201) configured to read information registered in the medium,
wherein the processor is configured to reproduce the characteristic of the virtual mobility while the medium is installed in the reading section (201).

**9.** The battery electric vehicle (100) according to claim 4, wherein the medium is the storage medium, and information on reproducing the characteristic of the one virtual mobility is stored in the medium.

**10.** The battery electric vehicle (100) according to claim 9, wherein the information on reproducing the characteristic of the one virtual mobility includes information on a sound waveform of reproducing an engine sound of the one virtual mobility.

**11.** The battery electric vehicle (100) according to any one of claims 1 to 3, wherein:

the virtual mobilities are classified into a plurality of vehicle categories; and
information on designating one of the vehicle categories is registered in the medium.

**12.** The battery electric vehicle (100) according to any one of claims 1 to 3, wherein:

the one virtual mobility is a manual transmission vehicle; and
the reproduction of the characteristic of the one virtual mobility includes reproducing a characteristic of the manual transmission vehicle.

**13.** The battery electric vehicle (100) according to claim 12, further comprising an accelerator pedal (22) and a sequential shifter,
wherein the reproduction of the characteristic of the manual transmission vehicle includes changing an output characteristic of the electric motor (2) with respect to an operation of the accelerator pedal (22) in response to a shift operation of the sequential shifter.

**14.** The battery electric vehicle (100) according to claim 12, further comprising an accelerator pedal (22), a pseudo clutch pedal, and a pseudo shift device, wherein

the pseudo clutch pedal is operated when the pseudo shift device is operated; and
the reproduction of the characteristic of the manual transmission vehicle includes changing an output of the electric motor (2) with respect to an operation of the accelerator pedal (22) in response to an operation of the pseudo clutch pedal and an operation of the pseudo shift device.

# FIG. 1

100

101 CONTROL DEVICE

22 ACCELERATOR PEDAL → 32 ACCELERATOR PEDAL STROKE SENSOR

24 BRAKE PEDAL → 34 BRAKE PEDAL STROKE SENSOR

102 PROCESSING CIRCUIT

103 STORAGE DEVICE

104 COMPUTER PROGRAM

105 DATA

20 HMI

21 IN-VEHICLE SPEAKER

16 INV

14 BATT

10 BMS

2 M

40

30

12

8

7

6

5

4

3

# FIG. 2

120 SOUND SOURCE DATA MANAGEMENT UNIT

200 BASIC SOUND SOURCE DATA

110 DRIVING STATE ACQUISITION UNIT

IN-VEHICLE SENSOR

DRV

130 SOUND GENERATION UNIT

200 BASIC SOUND SOURCE DATA

ES

140 OUTPUT UNIT

21

20 HMI

201 READING SECTION

EP 4 610 087 A1

# FIG. 3

START

S101 — REGISTRATION MEDIUM IS INSTALLED?

No

YES

S102 — READ INFORMATION IN REGISTRATION MEDIUM

S103 — READ VIRTUAL VEHICLE MODEL DATA CORRESPONDING TO TARGET VIRTUAL VEHICLE FROM STORAGE DEVICE

S104 — SIMULATE TARGET VIRTUAL VEHICLE

END

# FIG. 4

# FIG. 5

```
                    START

S201
No      REGISTRATION
        MEDIUM IS INSTALLED?

                         YES
S202
        READ INFORMATION
        (KIND AND VEHICLE CATEGORY OF VIRTUAL
        VEHICLE) IN REGISTRATION MEDIUM

                                              S204
S203          VIRTUAL                                  READ VIRTUAL VEHICLE MODEL DATA
        VEHICLE MODEL DATA                             CORRESPONDING TO READ VEHICLE
        CORRESPONDING TO KIND OF READ    No            CATEGORY FROM STORAGE DEVICE
        VIRTUAL VEHICLE IS
        PRESENT?                              S205
                                                       SIMULATE VIRTUAL VEHICLE BASED ON READ
                 YES                                   VIRTUAL VEHICLE MODEL DATA

                                              S206
                                                       REQUEST VIRTUAL VEHICLE MODEL DATA
                                                       FROM DATA CENTER AND RECEIVE VIRTUAL
                                                       VEHICLE MODEL DATA

                                              S207
                                                                                          No
                                                       RECEPTION IS COMPLETED?

S208                                                                   YES
        READ VIRTUAL VEHICLE MODEL DATA
        CORRESPONDING TO KIND OF TARGET
        VIRTUAL VEHICLE FROM STORAGE DEVICE

S209
        REPRODUCE TARGET VIRTUAL VEHICLE

                    END
```

# FIG. 6

# FIG. 7

**EP 4 610 087 A1**

Europäisches
Patentamt

European
Patent Office

Office européen
des brevets

# EUROPEAN SEARCH REPORT

**Application Number**

EP 25 15 5972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/229550 A1 (ISAMI YOICHIRO [JP]) 29 July 2021 (2021-07-29) * paragraph [0002] - paragraph [0031] * * paragraph [0042] - paragraph [0090] * * figures 1-9 * | 1-14 | INV. B60L3/00 B60L3/12 B60L15/20 B60Q5/00 G10K15/04 B60W30/18 |
| X | US 2022/041070 A1 (ISAMI YOICHIRO [JP] ET AL) 10 February 2022 (2022-02-10) * paragraph [0002] - paragraph [0024] * * paragraph [0042] - paragraph [0121] * * figures 1-16 * | 1-14 | B60W30/188 G10K15/02 |
| A | US 2022/041063 A1 (ISAMI YOICHIRO [JP] ET AL) 10 February 2022 (2022-02-10) * paragraph [0006] - paragraph [0023] * * paragraph [0040] - paragraph [0103] * * figures 1-14 * | 1-14 | |

TECHNICAL FIELDS
SEARCHED (IPC)

B60L
B60Q
G10K
B60W

The present search report has been drawn up for all claims

| Place of search | Date of completion of the search | Examiner |
|---|---|---|
| The Hague | 10 July 2025 | Hagan, Colm |

EPO FORM 1503 03.82 (P04C01)

## ANNEX TO THE EUROPEAN SEARCH REPORT
## ON EUROPEAN PATENT APPLICATION NO.

EP 25 15 5972

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | Publication date | Patent family member(s) | | Publication date |
|---|---|---|---|---|
| US 2021229550 A1 | 29-07-2021 | CN | 113147419 A | 23-07-2021 |
| | | EP | 3854626 A1 | 28-07-2021 |
| | | JP | 6787507 B1 | 18-11-2020 |
| | | JP | 2021118569 A | 10-08-2021 |
| | | US | 2021229550 A1 | 29-07-2021 |
| US 2022041070 A1 | 10-02-2022 | CN | 114056117 A | 18-02-2022 |
| | | JP | 7298566 B2 | 27-06-2023 |
| | | JP | 2022030862 A | 18-02-2022 |
| | | US | 2022041070 A1 | 10-02-2022 |
| | | US | 2024278654 A1 | 22-08-2024 |
| | | US | 2024278655 A1 | 22-08-2024 |
| | | US | 2024278656 A1 | 22-08-2024 |
| US 2022041063 A1 | 10-02-2022 | CN | 114056122 A | 18-02-2022 |
| | | JP | 7363711 B2 | 18-10-2023 |
| | | JP | 2022030814 A | 18-02-2022 |
| | | US | 2022041063 A1 | 10-02-2022 |
| | | US | 2024246425 A1 | 25-07-2024 |
| | | US | 2025091449 A1 | 20-03-2025 |

EPO FORM P0459

For more details about this annex : see Official Journal of the European Patent Office, No. 12/82

**REFERENCES CITED IN THE DESCRIPTION**

**Patent documents cited in the description**

- JP 6787507 B